## Europäisches Patentamt
## European Patent Office
## Office européen des brevets

(19)

(11) Veröffentlichungsnummer: **0 217 111**
**B1**

(12) **EUROPÄISCHE PATENTSCHRIFT**

(45) Veröffentlichungstag der Patentschrift:
27.12.89

(51) Int. Cl.⁴: **G01N 22/00**

(21) Anmeldenummer: **86111656.4**

(22) Anmeldetag: **22.08.86**

(54) **Verfahren zur Bestimmung der Verteilung der Dielektrizitätskonstanten in einem Untersuchungskörper sowie Messanordnung zur Durchführung des Verfahrens.**

(30) Priorität: **06.09.85 DE 3531893**

(43) Veröffentlichungstag der Anmeldung:
**08.04.87 Patentblatt 87/15**

(45) Bekanntmachung des Hinweises auf die Patenterteilung:
**27.12.89 Patentblatt 89/52**

(84) Benannte Vertragsstaaten:
**DE FR GB IT NL**

(56) Entgegenhaltungen:
**EP-A- 0 069 628**
**US-A- 3 562 642**
**US-A- 4 234 844**

(73) Patentinhaber: **Siemens Aktiengesellschaft,
Wittelsbacherplatz 2, D-8000 München 2(DE)**

(72) Erfinder: **Klingenbeck, Klaus, Dr., Dannberger Weg 8,
D-8521 Hessdorf(DE)**
Erfinder: **Regn, Judith, Reichstrasse 4,
D-8500 Nürnberg(DE)**

ACTORUM AG

## Beschreibung

Die Erfindung bezieht sich auf ein Verfahren zur Bestimmung der Verteilung der Dielektrizitätskonstanten in einem Untersuchungskörper, bei dem von einem Mikrowellensender ausgesandte Strahlung in den Untersuchungskörper eingestrahlt wird, bei dem die vom Untersuchungskörper durchgelassene und gestreute Strahlung von einem Mikrowellen-Detektor nach Amplitude und Phase erfaßt wird und bei dem aus dem Ausgangssignal des Mikrowellen-Detektors die Verteilung der Dielektrizitätskonstanten berechnet und zur Bilddarstellung gebracht wird (vergl. IEEE Transactions on Medical Imaging, Vol. MI-2, No. 4, Dec. 1983, Seiten 176 bis 195). Die Erfindung bezieht sich weiterhin auf eine Meßanordnung zur Durchführung des Verfahrens.

Es sind bereits verschiedene Versuche unternommen worden, die Verteilung der Dielektrizitätskonstanten $\varepsilon$ in biologischem Gewebe, insbesondere im menschlichen Körper, zu bestimmen. Diese für die Wechselwirkung elektromagnetischer Strahlung mit biologischem Gewebe maßgebliche physikalische Größe $\varepsilon$ soll für die Bildgebung in der medizinischen Diagnostik verwendet werden.

Bisher bekannte Ansätze der sogenannten Diffraktions-Tomographie wählen entweder feststehende lineare Antennenarrays (M. Slaney et al, IEEE Transactions on Microwave Theory and Techniques, Vol. NTT 32, 1984, Seiten 860 bis 874; M. Azimi und A.C. Kak, IEEE Transactions on Medical Imaging, Vol. MI-2, No. 4, Dezember 1983, Seiten 176 bis 195) oder aber feststehende flächenhafte Arrays (G. Peronnet et al, Proc. of the 13th European Microwave Conference, Nürnberg, Germany, Sept. 1983, Seiten 529 bis 533; RNM Images 14 (1984) 4, Seiten 32 bis 33, Seite 37) zur Meßwerterfassung. Bei den Systemen nach den drei erstgenannten Literaturstellen müssen auf jeden Fall zur Bestrahlung des Untersuchungsobjekts ebene Wellen verwendet werden. Die mit den bekannten Systemen erzeugten Bilder stellen Schnittbilder dar; allerdings wird in der letztgenannten Literaturstelle auch schon auf dreidimensionale Darstellungen abgehoben. Die Bildrekonstruktion wird aber in all diesen Fällen unter der Annahme durchgeführt, daß das Streufeld durch Einfachstreuung am Untersuchungskörper erzeugt wird.

Die vier letztgenannten Abbildungssysteme basieren also auf der Annahme der Einfachstreuung im Untersuchungsobjekt. Sie sind für die medizinische Diagnostik nur bedingt brauchbar, da sie massiv verfälschte Bilder von der Epsilon-Verteilung im biologischen Gewebe erzeugen. Ein Grund dafür ist, daß die Annahme der Einfachstreuung (diese entspricht der ersten Born'schen Näherung zur elektromagnetischen Wellengleichung) nur für schwach streuende und schwach inhomogene Objekte gilt, und zwar in einem solchen Fall nur näherungsweise. Beide Voraussetzungen, nämlich schwache Streuung und schwache Inhomogenität, sind aber, wie aus der Literatur ablesbar, für biologische Gewebe nicht erfüllt.

In der bereits erwähnten Literaturstelle RNM Images 14 (1984) 4, Seite 32 bis 33, Seite 37, wird ein Meßsystem beschrieben, bei dem eine Vielzahl von einzelnen Detektoren auf einem Zylinder angeordnet ist. Diese Einzeldetektoren sind an ein Meßwertverarbeitungssystem angeschlossen. Ein solches System erfordert eine große Anzahl von Einzeldetektoren und damit von Verarbeitungskanälen und ist entsprechend aufwendig.

Aus der US-PS 3 887 923 ist ein holographisches Meßsystem für Hochfrequenz bekannt, bei dem ebenfalls eine Vielzahl von Antennen oder Einzeldetektoren eingesetzt wird. Dabei handelt es sich jedoch ebenfalls um feststehende Antennen. Das dort vorgestellte System ist auf ein lineares Array festgelegt.

Aus der US-PS 3 818 427 ist ein Verfahren zur Aufzeichnung akustischer, synthetischer oder von Mikrowellen-Hologrammen bekannt. Bei diesem Verfahren sendet ein in einem Behälter angeordneter Sender Strahlung auf einen Untersuchungskörper, und an der Oberfläche der im Behälter befindlichen Flüssigkeit wird das resultierende Signal abgetastet. Hierbei handelt es sich um die Abtastung mittels einer Einzelantenne. Mit diesem Verfahren ist keine dreidimensionale Darstellung möglich.

Durch die EP-A 0 069 628 ist ein Gerät zur Bestimmung der Verteilung einer physikalischen Größe eines Untersuchungsobjektes in einer Ebene bekannt. Daraus wird ein Schnittbild in der untersuchten Ebene erzeugt; verschiedene Schnitte durch das Untersuchungsobjekt können nicht dargestellt werden. Welcher Art die physikalische Größe ist, läßt sich dieser Schrift nicht entnehmen.

Der Erfindung liegt die Aufgabe zugrunde, ein Verfahren der eingangs genannten Art so auszugestalten, daß es auf die Darstellung von Schnittbildern nicht beschränkt ist, sondern daß eine Berechnung der dreidimensionalen Verteilung der Dielektrizitätskonstanten möglich ist, wobei es möglich sein soll, daß man mit einer relativ geringen Anzahl von Einzeldetektoren und wenig Verarbeitungskanälen auskommt. Das Verfahren soll flexibel sein, d. h. es soll nicht auf die Darstellung von Schnittbildern aus ein für allemal festgelegten Schnitten beschränkt sein. Insbesondere soll das Verfahren so ausgestaltet werden, daß es die dreidimensionale Verteilung der komplexen Dielektrizitätskonstanten im menschlichen Körper zu bestimmen gestattet. Das Verfahren soll also die Vielfachstreuung berücksichtigen, so daß auch stark streuende Objekte im Untersuchungskörper getreu dargestellt werden können. Eine weitere Aufgabe besteht darin, eine Meßanordnung zur Durchführung des Verfahrens anzugeben.

Diese Aufgabe wird erfindungsgemäß dadurch gelöst, daß die durchgelassene und gestreute Strahlung in einem vorgegebenen Volumen durch Verstellung des Detektors nach Amplitude und Phase erfaßt wird, und daß daraus die Verteilung der Dielektrizitätskonstanten in dreidimensionaler Form berechnet und in wählbaren Schnitten durch den Untersuchungskörper zur Bilddarstellung gebracht wird.

Im Gegensatz zum Stand der Technik ist hier ein dreidimensionales Volumen vorgegeben, in dem mittels des Mikrowellen-Detektors die auffallende Strahlung gemessen wird. Aus den Daten, die vom Ausgangssignal des Mikrowellen-Detektors abgeleitet werden, läßt sich dann mittels Rechenoperationen auf die räumliche Verteilung der Dielektrizitätskonstanten im Untersuchungskörper schließen. Da die Strahlung in dem vorgegebenen Volumen erfaßt wird, kommt man - im Vergleich zu einer zylindrischen Anordnung von Detektorelementen - mit einer verhältnismäßig geringen Anzahl von Elementen im Mikrowellen-Detektor aus. Mittels mathematischer Operationen, die an sich z. B. aus der CT- oder MR-Technik bekannt sind, läßt sich ein beliebiger Schnitt durch die dreidimensionale Verteilung legen. Dieser Schnitt kann dann zur Darstellung gebracht werden auf einem Bilddarstellungsgerät.

Nach einer ersten Ausführungsform des Verfahrens ist vorgesehen, daß der Detektor ein flächenhaftes Detektorarray ist, das linear verschiebbar ausgebildet ist. Das Detektorarray muß dabei nicht eben, sondern kann prinzipiell nach einer beliebigen Form gestaltet sein.

Eine zweite Ausführungsform besteht darin, daß der Detektor flächenhaft als Array ausgebildet und um den Untersuchungskörper drehbar ist. Auch hierbei kann das Detektorarray gekrümmt oder eben geformt sein. Beispielsweise kann es die Form einer Kugelkalotte oder eines Zylindermantel-Teils haben. Dabei sollte jedoch darauf geachtet sein, daß der Krümmungsradius ungleich dem Umlaufradius um den Untersuchungskörper gewählt wird.

Eine dritte Ausführungsform besteht darin, daß der Detektor linienhaft ausgebildet ist, daß er um den Untersuchungskörper drehbar angeordnet und in Richtung auf diesen oder von diesen weg verschiebbar ist.

Nach einer vierten Ausführungsform ist der Detektor ein Einzeldetektor, der das vorgesehene Volumen in bezug auf Amplitude und Phase abtastet.

Nach einer besonders bevorzugten Ausführungsform wird bei dem vorliegenden Verfahren die Bildrekonstruktion unter Berücksichtigung der Vielfachstreuung durchgeführt. Da Amplitude und Phase des bestreuten Wellenfeldes gemessen werden, ist - in Analogie zur Optik - die Bildrekonstruktion holographischer Natur. Hierfür besonders geeignete mathematische Operationen werden im folgenden angegeben. Da zur Bilderzeugung somit die Mehrfachstreuung berücksichtigt wird, kann - wie Simulationsrechnungen bestätigt haben - die Epsilon-Verteilung im Untersuchungskörper präzise bestimmt werden. Damit ist es möglich, das Verfahren insbesondere für die medizinische Diagnostik einzusetzen.

Die weiter genannte Aufgabe wird bei einer Meßanordnung zur Durchführung des Verfahrens gemäß dem Oberbegriff des Anspruchs 8 dadurch gelöst, daß der Mikrowellen-Detektor so ausgestaltet und verstellbar ist, daß er die durchgelassene und gestreute Strahlung in dem vorgegebenen Volumen nach Amplitude und Phase erfaßt, und daß das Ausgangssignal des Detektors einem Rechner zugeführt ist, der daraus die dreidimensionale Verteilung berechnet.

Besonders bevorzugt ist hierbei eine Ausführungsform, bei der der Mikrowellen-Detektor flächenhaft als Array ausgebildet ist, und bei der eine Einrichtung zur linearen Verschiebung des Mikrowellen-Detektorarrays vorgesehen ist. Dabei können die Einzeldetektoren dieses Detektorarrays insbesondere auf einer ebenen Fläche angeordnet sein. Auch können sie, wie an sich aus der Radartechnik bekannt, als Dipolantennen ausgebildet werden.

Ein Ausführungsbeispiel der Erfindung ist in einer Figur dargestellt und wird im folgenden näher erläutert.

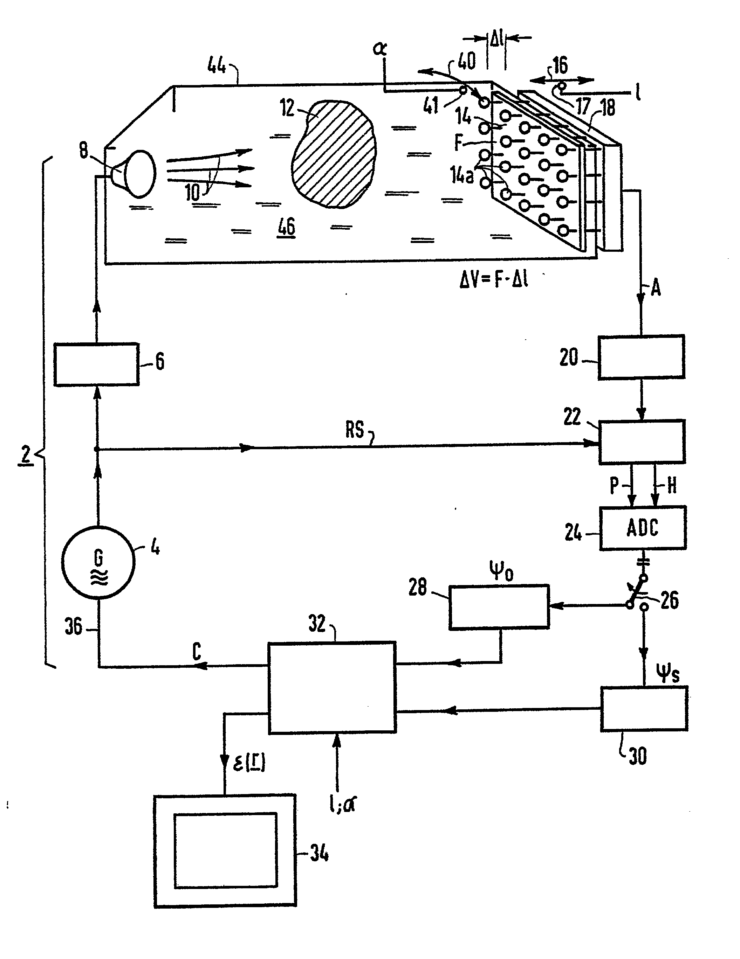

Die Figur zeigt eine Meßanordnung zur Bestimmung der Verteilung der Dielektrizitätskonstanten in einem Untersuchungskörper. Allerdings soll bereits hier schon betont werden, daß diese Meßanordnung im Prinzip auch zur Messung der Verteilung der Schallgeschwindigkeit in einem Untersuchungskörper verwendet werden kann. Die hierfür erforderlichen Modifikationen sind weiter unten näher ausgeführt.

Die Meßanordnung umfaßt einen Mikrowellensender 2, der aus einem HF-Oszillator 4, einem nachgeschalteten Verstärker 6 und einer von dem Verstärker 6 betriebenen (um den Untersuchungskörper drehbaren) Sendeantenne 8 besteht. Dieser Sender 2 erzeugt entweder gepulst oder kontinuierlich Mikrowellenstrahlung. Die von der Sendeantenne 8 abgegebenen Wellen müssen dabei nicht ebene Wellen sein; sie können prinzipiell ein beliebiges Wellenfeld bilden. Aus Gründen der wellenlängen-begrenzten Auflösung und der Eindringtiefe ist eine Hochfrequenz f von wenigen Giga-Hertz angebracht. Im Prinzip könnten dem Verstärker 6 auch mehrere Sendeantennen 8 elektrisch nachgeschaltet sein.

Die von dem Mikrowellensender 2 abgegebene Strahlung 10 trifft im Meßbetrieb auf einen zu untersuchenden Körper 12 auf und tritt mit ihm in Wechselwirkung. Die vom Untersuchungskörper 12 durchgelassene und gestreute Strahlung trifft auf ein Mikrowellen-Detektorarray 14 auf. Dieses enthält eine Vielzahl von Einzeldetektoren oder Mikrowellen-Empfangsantennen 14a, vorzugsweise angeordnet in einer ebenen Fläche F. Das Mikrowellen-Detektorarray 14 ist mittels einer (nicht gezeigten) Vorrichtung in Hauptstrahlrichtung linear verschiebbar. Diese Verschiebbarkeit ist durch einen Doppelpfeil 16 angedeutet. Die jeweilige Position 1 wird mit einem Positionsgeber 17, insbesondere auf berührungslosem Wege, ermittelt. Beim Verschieben um die Strecke $\Delta$ 1 wird vom Mikrowellen-Detektorarray 14 ein vorgegebenes Volumen $\Delta V = F \cdot \Delta$ 1 durchfahren. Die einzelnen Detektoren 14a des Detektorarrays 14 sind imstande, Ausgangssignale abzugeben, die das auffallende elektromagnetische Strahlungsfeld am Ort des betreffenden Detektors 14a nach Amplitude und Zeit charakterisieren. Die Ausgangssignale der Detektoren 14a dieses Detektorarrays 14 werden nacheinander mit Hilfe eines Multiplexers 18, der auch einen Vorverstärker beinhalten kann, abgefragt. Das so gebildete Ausgangssignal A wird einem Verstärker 20 zugeleitet.

Im Prinzip könnte jedem Einzeldetektor 14a des Detektorarrays 14 auch ein eigener Verstärker zugeordnet sein. Dadurch würde sich allerdings der Aufwand erhöhen.

Das verstärkte Ausgangssignal A wird in einem phasenempfindlichen Detektor 22 mit einem Referenz-Signal RS, das vom HF-Oszillator 4 abgeleitet ist, verglichen. Der Vergleich liefert die Amplitude und die relative Phase bezüglich des HF-Oszillator-Ausgangssignals. Diese Größen werden durch zwei Ausgangssignale P (für Phase) und H (für Amplitude) angezeigt. Die beiden Ausgangssignale P und H sind einer Analog-Digital-Umsetzereinheit 24 zugeführt. Hier werden sie in die entsprechenden digitalen Signale umgesetzt. Diese Ausgangssignale werden über einen Umschalter 26 entweder einem Speicher 28 für Eichmeßdaten $\psi_0$ oder einem Datenspeicher 30 für Streufelddaten $\psi_S$ zugeleitet. Im Prinzip kann sich an den Ausgang der Analog-Digital-Umsetzereinheit 24 auch nur ein einziger Datenspeicher höheren Speicherinhalts anschließen. Im ersten Datenspeicher 28 werden die in einer Eichphase ohne Untersuchungskörper 12 gewonnenen Daten gespeichert, während im zweiten Datenspeicher 30 diejenigen Daten abgelegt werden, die während der eigentlichen Untersuchungsphase gewonnen werden. Die Ausgänge der beiden Speicher 28, 30 sind mit einem Rechner 32 verbunden. Hier werden die Daten der beiden Speicher 28, 30 miteinander verknüpft, wie im folgenden noch näher dargelegt werden wird. Dabei wird die jeweilige Position 1 berücksichtigt. Der Rechner 32 ermittelt die dreidimensionale Verteilung der Dielektrizitätskonstanten Epsilon im Untersuchungskörper 12. Er ist ausgangsseitig mit einer Bildausgabeeinheit 34 oder einem anderen Aufzeichnungsgerät verbunden. An einem (nicht gezeigten) Eingang des Rechners 32 läßt sich (hardware- oder softwaremäßig) ein Schnitt durch die dreidimensionale $\varepsilon$-Verteilung vorgeben, ähnlich wie bei einem Computer-Tomographen (CT). Somit kommt ein zweidimensionaler Schnitt durch den Untersuchungskörper 12 auf der Bildausgabeeinheit 34 zur Darstellung. Bei Bedarf oder Interesse kann eine andere Schnittdarstellung gewählt werden. Auch dreidimensionale Darstellungen sind möglich, wobei die Blickrichtung gewählt werden kann.

Der Rechner 32 bildet auch ein Steuersignal C für den Betrieb des HF-Oszillators 4. Dieses Steuerungssignal C wird dem HF-Oszillator über eine Leitung 36 zugeführt.

Zum Nachweis der vom Untersuchungskörper 12 durchgelassenen und gestreuten Strahlung dient, wie bereits ausgeführt, das Mikrowellen-Detektorarray 14. Die Einzeldetektoren 14a des Detektorarrays 14 können auf einer ebenen, einer zylinderförmigen oder einer kugelförmigen Fläche angeordnet sein. Vorliegend ist eine ebene Fläche F gewählt. Die Verschiebung innerhalb der Strecke $\Delta$1 entlang der Hauptstrahlrichtung erfolgt in kleinen Schritten. Bei jedem Schritt wird ein Satz Daten (Amplitude, Phase) für den Ort jedes Detektorelements 14a ermittelt. Um eine optimale Auflösung zu erreichen, sollte das Detektorarray 14 einen möglichst großen Raumwinkel erfassen.

Eine weitere Möglichkeit besteht darin, das Detektorarray 14 um den Untersuchungskörper 12 herumzuführen. Dies geschieht zweckmäßigerweise schrittweise auf einer Kreisbahn und ist durch einen Doppelpfeil 40 angedeutet. Bei einer solchen Ausführungsform kommt man mit verhältnismäßig wenig Einzelelementen 14a aus. Lineare Bewegungs- und Drehbewegungsmöglichkeit des Detektorarrays 14 sind also in diesem Fall gleichzeitig vorgesehen. In jeder Drehwinkelstellung kann für jeden linearen Schritt ein Satz (Amplitude, Phase) für den Ort eines jeden Detektorelements 14a aufgenommen werden. Ein Winkelstellungsgeber 41 stellt die jeweilige Drehwinkelstellung $\alpha$ fest. Diese Drehwinkelstellung $\alpha$ wird ebenfalls dem Rechner 32 mitgeteilt.

Das Detektorarray 14 im Zusammenhang mit dem phasenempfindlichen Detektor 22 ist also vorliegend in der Lage, sowohl Amplitude H als auch Phase P des Streufeldes relativ zu dem festen Referenz-Signal RS zu messen. Die Verwendung eines Antennenarrays, also einer fest verdrahteten Antennenanordnung auf einer Fläche, ist wichtig für eine kurze Meßwerterfassungszeit und eine hohe Meßgenauigkeit. Mit einer üblichen Einzelantenne wären im Scanbetrieb bereits aus mechanischen Gründen die erforderliche Meßgenauigkeit und Meßzeit nur unzureichend zu erzielen.

Im Betrieb der Meßanordnung wird zunächst eine Eichmessung ohne Untersuchungskörper 12 und dann die eigentliche Messung am Untersuchungskörper 12 durchgeführt. Dabei wird zunächst bei der Eichmessung Mikrowellenstrahlung, die am vorgesehenen Ort des Untersuchungskörpers 12 auftritt, nach Amplitude und Phase erfaßt und in dem ersten Speicher 28 abgelegt. Für die Eichmessung wird vorliegend dasselbe Detektorarray 14 wie für die eigentliche Messung verwendet. Prinzipiell könnte auch ein geometrisch andersgeartetes Array von Detektoren verwendet werden. Das Detektorarray 14 steht bei dieser Eichmessung am vorgesehenen Ort des Untersuchungskörpers.

Wie erwähnt, werden also zunächst die Eichmeßdaten nach A/D-Wandlung dem ersten Datenspeicher 28 (oder einem gemeinsamen Speicher) zugeführt. Bei der eigentlichen Messung werden dann die Meßdaten dem zweiten Datenspeicher 30 zugeleitet. Aus beiden Gruppen von Meßdaten erzeugt der Rechner 32, vorzugsweise mit Hilfe des unten beschriebenen Rekonstruktions-Algorithmus, die gewünschte dreidimensionale räumliche Verteilung der komplexen Dielektrizitätskonstanten. Diese dreidimensionale Verteilung kann auf der Bildausgabeeinheit 34 dargestellt werden. Dabei können eine räumliche Darstellung oder aber auch zweidimensionale Schnittbilder der dreidimensionalen Verteilung gewählt werden.

Die Anordnung aus Sendeantenne 8, Untersuchungskörper 12 und Detektorarray 14 befindet sich in einem Behälter 44, der mit einem Koppelmedium 46 großer Dielektrizitätskonstante gefüllt ist. Dabei kann es sich zum Beispiel um Alkohol, Öl, Gummi oder aber insbesondere um Wasser mit $\varepsilon = 80$ handeln. Dadurch wird zum einen eine günstige Ankopplung der Mikrowellenenergie an den Untersuchungskörper 12 und zum anderen eine möglichst große Wellenlängen-Verkürzung gegenüber der Vakuumwellenlänge der verwendeten Mikrowellenstrahlung erreicht.

Die mathematische Grundlage zur hier verwendeten Bilderstellung ist die inhomogene (skalare) Helmholtz-Gleichung. Die exakte Lösung dazu ist die Lippmann-Schwinger-Integral-Gleichung:

$$\Psi(\underline{r}) = \Psi_0(\underline{r}) + \int G(\underline{r},\underline{r}') \, V(\underline{r}') \, \Psi(r') \, d^3\underline{r}' \qquad (1)$$

wobei $\psi_0$ das einlaufende Wellenfeld, $G$ die Greensfunktion der Helmholtz-Gleichung und $V(\underline{r})$ das Streupotential bezeichnet. $V$ ist durch die dielektrischen Eigenschaften des Untersuchungskörpers 12 und des umgebenden Koppel-Mediums 46 bestimmt:

$$V(\underline{r}) = \frac{\omega}{c} \left( \sqrt{\varepsilon \mu'} - \sqrt{(\underline{r}) \, \mu(\underline{r})'} \, \right) \qquad (2)$$

$\varepsilon$ bezeichnet die Dielektrizitätskonstante des umgebenden homogenen Koppel-Mediums 46 und $\varepsilon(\underline{r})$ die entsprechende $\varepsilon$-Verteilung im Untersuchungskörper 12. $\omega$ ist die Kreisfrequenz $2\pi f$, wobei $f$ die Frequenz der verwendeten Mikrowellenstrahlung ist.

Die Permeabilität $\mu$ ist im biologischen Bereich etwa $\mu = \mu(\underline{r}) = 1$. Mit $c$ ist die Lichtgeschwindigkeit bezeichnet.

Ziel des Abbildungsverfahrens ist es, $\varepsilon(\underline{r})$ aus den gemessenen Wellenfeldern $\psi(\underline{r})$ zu ermitteln. Eine Näherungslösung zur Gleichung (1) ist die erste Born'sche Näherung, die man erhält, indem man das Feld $\psi$ unter dem Integral durch das ungestörte einlaufende Feld $\psi_0$ ersetzt. Wie bereits erwähnt, ist diese Näherung für die medizinische Diagnostik unzureichend.

Eine Lösung von Gleichung (1) ist möglich, da der Untersuchungskörper 12 und damit das Streupotential $V(\underline{r})$ endlich ist, d. h. $V(\underline{r}) = 0$ für $|\underline{r}| > R$. $R$ ist dabei der Radius einer Kugel, die den Körper 12 ohne Einschluß der Einzeldetektoren 14a vollständig umschließt. Daher kann die Gleichung (1) in zwei Gleichungen (3a), (3b) separiert werden, nämlich eine für das beobachtete Streufeld $\psi_S = \psi - \psi_0$ und eine für das interne Feld $\psi_{int}$ im Bereich des Untersuchungskörpers 12 ($|\underline{r}| < R$):

$$\Psi_S = G_S \, V \, \Psi_{int} \qquad (3a)$$

$$\Psi_{int} = \Psi_0 + G_T \, V \, \Psi_{int} \qquad (3b)$$

Diese Kurzschreibweise entspricht der in der Quantenmechanik üblichen Operatorformulierung, d. h. die genannten Größen können, müssen aber nicht Matrizen sein. Die Lösung der Gleichungen (3a), (3b) ist:

$$V = G_S^{-1} \, \Psi_S \, ( \mathbb{1}\Psi_0 + G_T G_S^{-1} \, \Psi_S)^{-1} \qquad (4)$$

$$\mathbb{1}$$

ist hierbei der Einheitsoperator, bei Matrixrechnung also die Einheitsmatrix. $G_S^{-1}$ ist die invertierte Greensfunktion.

Wenn also das Streufeld $\psi_S$ und das ungestörte einlaufende Feld $\psi_0$ gemessen sind, kann $V(\underline{r})$ vom Rechner 32 berechnet werden. Danach kann - nach Umformung von Gleichung (2) - vom Rechner 32 $\varepsilon(\underline{r})$ berechnet werden. Die für die Berechnung der Greensfunktionen $G_S$ und $G_T$ notwendigen Parameter (Abstände, Wellenzahl, etc.) sind durch die Sende- und Detektoranordnung und die Sendefrequenz $f$ bestimmt.

Vorzugsweise wird die Matrixrechnung benutzt.

Bei der Berechnung der $\varepsilon$-Verteilung über Gleichung (2) und (4) können zwei Darstellungen verwendet werden:

### 1. Ortungsraumdarstellung

In diesem Fall sind die Greensfunktionen $G_S$, $G_T$ nichtdiagonal, und die numerische Berechnung von V nach Gleichung (4) erfordert die Inversion der entsprechenden Matrizendarstellungen. Für eine hohe Anzahl von Meßwerten, d. h. bei großen Untersuchungskörpern schon bei geringer Auflösung und bei kleinen Untersuchungskörpern bei hoher räumlicher Auflösung, ist diese Rechenmethode nicht angemessen, da die Matrixinversion mit der heutigen Rechentechnik lange Rechenzeiten und großen Speicherbedarf erfordert.

### 2. Fourierdarstellung

Die andere Rechenmethode zur Berechnung von V nach Gleichung (4) erhält man durch dreidimensionale Fouriertransformation der in den Gleichungen (3a) und (3b) enthaltenen Größen. Da jeder Greensoperator $G_T$, $G_S$ im Fourierraum diagonal ist, kann damit die Matrixinversion umgangen werden, d. h. $G^{-1}$ in Gleichung (4) bedeutet lediglich eine Division mit den entsprechenden Fourierkomponenten von $G_S$, $G_T$. Der Einsatz von FFT-Techniken (Fast Fourier Transformations-Verfahren) führt dabei auch bei hoher Anzahl von Meßwerten zu vergleichsweise kurzen Rechenzeiten. Mit der Fouriertechnik ist somit eine Art Echtzeit-Darstellung möglich. Diese 2. Rechenmethode wird daher bei der Berechnung im Rechner 32 vorgezogen.

Für den Einsatz der schnellen Fouriertechnik ist es notwendig, entweder das Streufeld mit dem (im Prinzip dargestellten) Detektorarray 14 in dem erwähnten dreidimensionalen kartesischen Volumen zu messen, wobei die Verschiebbarkeit in Richtung des Doppelpfeils 16 sichergestellt ist, oder aber auf anderem Wege (nicht gezeigt) gewonnene Meßwerte auf ein dreidimensionales kartesisches Raster unter Zuhilfenahme von Interpolationen umzurechnen.

## Patentansprüche

1. Verfahren zur Bestimmung der Verteilung der Dielektrizitätskonstanten in einem Untersuchungskörper, bei dem von einem Mikrowellensender (8) ausgesandte Strahlung (10) in den Untersuchungskörper (12) eingestrahlt wird, bei dem die vom Untersuchungskörper (12) durchgelassene und gestreute Strahlung von einem Mikrowellen-Detektor (14) nach Amplitude und Phase erfaßt wird und bei dem aus dem Ausgangssignal (A) des Mikrowellen-Detektors (14) die Verteilung der Dielektrizitätskonstanten berechnet und zur Bilddarstellung gebracht wird, dadurch gekennzeichnet, daß die durchgelassene und gestreute Strahlung in einem vorgegebenen Volumen ($\Delta V$) durch Verstellung des Detektors (14) nach Amplitude und Phase erfaßt wird, und daß daraus die Verteilung der Dielektrizitätskonstanten ($\varepsilon(\underline{r})$) in dreidimensionaler Form berechnet und wählbaren Schnitten durch den Untersuchungskörper (12) zur Bilddarstellung gebracht wird.

2. Verfahren nach Anspruch 1, dadurch gekennzeichnet, daß der Detektor (14) ein flächenhaft ausgebildetes Mikrowellen-Detektorarray (14) ist und linear verschoben wird.

3. Verfahren nach Anspruch 1, dadurch gekennzeichnet, daß der Detektor (14) ein flächenhaft ausgebildetes Mikrowellen-Detektorarray (14) ist und sich um den Untersuchungskörper (12) dreht.

4. Verfahren nach Anspruch 1, dadurch gekennzeichnet, daß der Detektor (14) ein linear ausgebildetes Mikrowellen-Detektorarray (14) ist, sich um den Untersuchungskörper (12) dreht und in Richtung auf den Untersuchungskörper (12) zu- oder von diesem wegbewegt wird.

5. Verfahren nach Anspruch 1, dadurch gekennzeichnet, daß als Detektor ein Einzeldetektor vorgesehen ist, der das vorgegebene Volumen ($\Delta V$) abtastet.

6. Verfahren nach einem der Ansprüche 1 bis 5, dadurch gekennzeichnet, daß zunächst eine Eichmessung ohne Untersuchungskörper (12) und dann erst die eigentliche Messung am Untersuchungskörper (12) durchgeführt wird, wobei bei der Eichmessung Mikrowellen-Strahlung, die am vorgesehenen Ort des Untersuchungskörpers (12) auftrifft, nach Amplitude und Phase erfaßt und in einem Speicher (28) abgelegt wird.

7. Verfahren nach Anspruch 1, dadurch gekennzeichnet, daß die Verteilung der Dielektrizitätskonstanten ($\varepsilon(\underline{r})$) in dreidimensionaler Form im Untersuchungskörper (12) berechnet wird unter Verwendung der folgenden Gleichungen:

$$V(\underline{r}) = \frac{\omega}{c} \left( \sqrt{\varepsilon \mu}' - \sqrt{\varepsilon(\underline{r}) \cdot \mu(\underline{r})}' \right) \qquad \text{und}$$

$$V = G_S^{-1} \, \psi_S \, ( \mathbb{1} \psi_0 + G_T G_S^{-1} \, \psi_S)^{-1},$$

wobei $V(\underline{r})$ das Streupotential, $\omega = 2\pi f$ die Kreisfrequenz der verwendeten Mikrowellen-Strahlung, c die Lichtgeschwindigkeit, $\varepsilon$ die Dielektrizitätskonstante des Koppelmediums, $\mu$ und $\mu(\underline{r})$ die Permeabilität des Koppelmediums bzw. des Untersuchungskörpers, $G_S$ und $G_T$ die Greensfunktion – vorzugsweise in Matrixdarstellung – für die Ausbreitung der Mikrowellen-Strahlung vom Untersuchungskörper zu einem Meßort im vorgegebenen Volumen bzw. zwischen zwei Orten im Untersuchungskörper, $G_S^{-1}$ die invertierte Greensfunktion $G_S$, $\psi_0$ das einlaufende Strahlungsfeld am Ort des Untersuchungskörpers und s das Streufeld am Meßort sowie

$$\mathbf{1}$$

den Einheitsoperator (vorzugsweise die Einheitsmatrix) bedeutet.

8. Meßanordnung zur Bestimmung der Verteilung der Dielektrizitätskonstanten in einem Untersuchungskörper, bei der von einem Mikrowellensender (8) ausgesandte Strahlung (10) in den Untersuchungskörper (12) eingestrahlt wird, bei der die vom Untersuchungskörper (12) durchgelassene und gestreute Strahlung von einem Mikrowellen-Detektor (14) nach Amplitude und Phase erfaßt wird und bei der aus dem Ausgangssignal (A) des Mikrowellen-Detektors (14) die Verteilung der Dielektrizitätskonstanten berechnet und zur Bilddarstellung gebracht wird, dadurch gekennzeichnet, daß der Mikrowellen-Detektor (14) so ausgestaltet und verstellbar ist, daß er die durchgelassene und gestreute Strahlung in dem vorgegebenen Volumen ($\Delta V$) nach Amplitude und Phase erfaßt, und daß das Ausgangssignal (A) des Detektors (14) einem Rechner (32) zugeführt ist, der daraus die dreidimensionale Verteilung ($\varepsilon(\underline{r})$) berechnet.

9. Meßanordnung nach Anspruch 8, dadurch gekennzeichnet, daß der Mikrowellen-Detektor (14) flächenhaft als Array ausgebildet ist, und daß eine Einrichtung (16) zur linearen Verschiebung des Mikrowellen-Detektors (14) vorgehen ist.

10. Meßanordnung nach Anspruch 9, dadurch gekennzeichnet, daß die Einzeldetektoren (14a) des Mikrowellen-Detektorarrays (14) auf einer ebenen Fläche angeordnet sind.

11. Meßanordnung nach einem der Ansprüche 8 bis 10, dadurch gekennzeichnet, daß als Einzeldetektoren (14a) des als Array ausgebildeten Mikrowellen-Detektors (14) Dipolantennen vorgesehen sind.

12. Meßanordnung nach einem der Ansprüche 8 bis 11, dadurch gekennyeichnet, daß der Mikrowellensender (8), der Untersuchungsk;rper (12) und der Mikrowellen-Detektor (14) gemeinsam in einem Koppelmedium (46) hoher Dielektrizit'tskonstanten untergebracht sind.

13. Meßanordnung nach einem der Ansprüche 8 bis 12, dadurch gekennzeichnet, daß zum Betrieb des Mikrowellensenders (8) ein HF-Oszillator (4) vorgesehen ist, dessen Ausgangssignal als Referenz-Signal (RS) einem phaenempfindlichen Detektor (22) zugeführt ist, dessen Eingang vom Ausgangssignal (A) des Mikrowellen-Detektors (14) beaufschlagt ist.

14. Meßanordnung nach Anspruch 13, dadurch gekennzeichnet, daß das Ausgangssignal (P, H) des phasenempfindlichen Detektors (22) über einen Analog-Digital-Wandler (24) einem Speicher (28,30) zugeführt ist.

15. Meßanordnung nach Anspruch 14, dadurch gekennzeichnet, daß das Ausgangssignal des Analog-Digital-Wandlers (24) wahlweise einem Speicher (28) für Eichmeßdaten oder einem Speicher (30) für Meßdaten vom Untersuchungskörper (12) zugeführt ist.

16. Meßanordnung nach Anspruch 14 oder 15, dadurch gekennzeichnet, daß der Ausgang des Speichers (28, 30) an den Rechner (32) angeschlossen ist, der mit einem Monitor (34) verbunden ist.

17. Meßanordnung nach Anspruch 16, dadurch gekennzeichnet, daß der Rechner (32) zur Bildung eines Steuerungssignals (C) eingerichtet ist, das den HF-Oszillator (4) beaufschlagt.

**Revendications**

1. Procédé pour déterminer la distribution des constantes diélectriques dans un corps examiné, selon lequel un rayonnement (10) émis par un émetteur à micro-ondes (8) est irradié dans le corps examiné (12), selon lequel le rayonnement que le corps examiné (12) a laissé passer et a dispersé est détecté en amplitude et phase par un détecteur à micro-ondes (14) et selon lequel la distribution des constantes diélectriques est calculée à partir du signal de sortie (A) du détecteur à micro-ondes (14) et est transformée en une image, caractérisé en ce que le rayonnement traversant et dispersé est détecté en amplitude et phase dans un volume préfixé ($\Delta V$) par déplacement du détecteur (14) et que, à partir des données ainsi obtenues, la distribution des constantes diélectriques ($\varepsilon(\underline{r})$) est calculée sous une forme tridimensionnelle et est transformée en images de coupes pouvant être choisies du corps examiné (12).

2. Procédé selon la revendication 1, caractérisé en ce que le détecteur (14) est un système détecteur à micro-ondes (14) réalisé en nappe et déplacé linéairement.

3. Procédé selon la revendication 1, caractérisé en ce que le détecteur (14) est un système détecteur à micro-ondes (14) réalisé en nappe et tournant autour du corps examiné (12).

4. Procédé selon la revendication 1, caractérisé en ce que le détecteur (14) est un système détecteur à micro-ondes (14) de forme linéaire, qui tourne autour du corps examiné (12) et est déplacé dans le sens de son approche et de son éloignement du corps examiné (12).

5. Procédé selon la revendication 1, caractérisé en ce que le détecteur est un détecteur unique qui explore le volume préfixé ($\Delta V$).

6. Procédé selon une des revendications 1 à 5, caractérisé en ce que l'on effectue d'abord une mesure d'étalonnage sans corps (12) et ensuite seulement la mesure proprement dite sur le corps examiné (12), avec détection, lors de la mesure d'étalonnage, du rayonnement à micro-ondes tombant sur l'endroit prévu pour le corps à examiner (12), la détection s'opérant en amplitude et en phase, et avec stockage des données obtenues dans une mémoire (28).

7. Procédé selon la revendication 1, caractérisé en ce que l'on calcule la distribution des constantes diélectriques ($\varepsilon(\underline{r})$) sous une forme tridimensionnelle dans le corps examiné (12), en utilisant les équations suivantes:

$$V(\underline{r}) = \frac{\omega}{c} \left( \sqrt{\varepsilon\,\mu} - \sqrt{\varepsilon(\underline{r}) \cdot \mu(\underline{r})} \right) \quad \text{et}$$

$$V = G_S^{-1} \psi_S \left( \mathbb{1}\,\psi_0 + G_T G_S^{-1} \psi_S \right)^{-1},$$

où $V(\underline{r})$ désigne le potentiel de dispersion, $\omega = 2\pi f$ la fréquence angulaire du rayonnement à micro-ondes employé, c la vitesse de la lumière, $\varepsilon$ la constante diélectrique du milieu de couplage, $\mu$ et $\mu(\underline{r})$ la perméabilité du milieu de couplage et du corps examiné, $G_S$ et $G_T$ la fonction de Green – de préférence en représentation matricielle – pour la propagation du rayonnement à micro-ondes depuis le corps examiné, à un lieu de mesure dans le volume préfixé ou entre deux lieux dans le corps examiné, $G_S^{-1}$ la fonction de Green $G_S$ inversée, $\psi_0$ le champ de rayonnement entrant à l'endroit où se trouve le corps examiné, $\psi_S$ le champ de dispersion au lieu de mesure et

$$\mathbb{1}$$

l'opérateur unité (de préférence la matrice unité).

8. Dispositif de mesure pour déterminer la distribution des constantes diélectriques dans un corps examiné, dans lequel le rayonnement (10) émis par un émetteur à micro-ondes (8) est irradié dans le corps examiné (12), dans lequel le rayonnement traversant le corps (12) et dispersé par lui est détecté en amplitude et en phase par un détecteur à micro-ondes (14) et dans lequel la distribution des constantes diélectriques est calculée à partir du signal de sortie (A) du détecteur à micro-ondes (14) et est transformée en une image représentée, caractérisé en ce que le détecteur à micro-ondes (14) est réalisé et déplaçable de manière qu'il détecte le rayonnement traversant et dispersé en amplitude et en phase dans le volume préfixé ($\Delta V$) et que le signal de sortie (A) du détecteur (14) est appliqué à un calculateur (32) qui, à partir de ce signal, calcule la distribution ($\varepsilon(\underline{r})$) tridimensionnelle.

9. Dispositif selon la revendication 8, caractérisé en ce que le détecteur à micro-ondes (14) est réalisé comme un système en nappe et qu'un dispositif (16) est prévu pour la translation linéaire du détecteur à micro-ondes (14).

10. Dispositif selon la revendication 9, caractérisé en ce que les détecteurs élémentaires (14a) du système détecteur à micro-ondes (14) sont disposés sur une surface plane.

11. Dispositif selon une des revendications 8 à 10, caractérisé en ce que des antennes dipôles sont prévus comme détecteurs élémentaires (14a) du système détecteur à micro-ondes (14).

12. Dispositif selon une des revendications 8 à 11, caractérisé en ce que l'émetteur à micro-ondes (8), le corps examiné (12) et le détecteur à micro-ondes (14) sont placés ensemble dans un milieu de couplage (46) à haute constante diélectrique.

13. Dispositif selon une des revendications 8 à 12, caractérisé en ce que l'émetteur à micro-ondes (8) est alimenté par un oscillateur HF (4) dont le signal de sortie est appliqué en tant que signal de référence (RS) à un détecteur (22) à sensibilité de phase, dont l'entrée reçoit le signal de sortie (A) du détecteur à micro-ondes (14).

14. Dispositif selon la revendication 13, caractérisé en ce que le signal de sortie (P, H) du détecteur (22) à sensibilité de phase est appliqué à travers un convertisseur analogique-numérique (24) à une mémoire (28, 30).

15. Dispositif selon la revendication 14, caractérisé en ce que le signal de sortie du convertisseur analogique-numérique (24) est appliqué sélectivement à une mémoire (28) pour des données de mesure d'étalonnage ou à une mémoire (30) pour des données de mesure du corps examiné (12).

16. Dispositif selon la revendication 14 ou 15, caractérisé en ce que la sortie de la mémoire (28, 30) est connectée au calculateur (32), lequel est relié à un écran de contrôle (34).

17. Dispositif selon la revendication 16, caractérisé en ce que le calculateur (32) est conçu pour produire un signal de commande (C) qui agit sur l'oscillateur HF (4).

## Claims

1. Method for determining the distribution of dielectric constants in a test sample, in which the test sample (12) is irradiated with radiation (10) emitted from a microwave transmitter (8), and the radiation transmitted and diffused by the test sample (12) is detected by a microwave detector (14) according to amplitude and phase, and the distribution of dielectric constants is calculated from the output signal (A) of the microwave detector (14) and presented in pictorial display, characterized in that the transmitted and diffused radiation in a specified volume ($\Delta V$) is detected according to amplitude and phase by adjustment of the detector (14), and in that the distribution of dielectric constants ($\varepsilon(\underline{r})$) is calculated from this in three-dimensional form and is presented in pictorial display in selectable sections through the test sample (12).

2. Method according to claim 1, characterized in that the detector (14) is an areally constructed microwave detector array (14) and is linearly displaced.

3. Method according to claim 1, characterized in that the detector (14) is an areally constructed microwave detector array (14) and rotates around the test sample (12).

4. Method according to claim 1, characterized in that the detector (14) is a linearly constructed microwave detector array (14), that it rotates around the test sample (12), and is moved in the direction of the test sample (12), towards or away from it.

5. Method according to claim 1, characterized in that a single detector is provided as the detector, which scans the specified volume ($\Delta V$).

6. Method according to one of claims 1 to 5, characterized in that first a calibration measurement is carried out without the test sample (12), and only after this is the actual measurement carried out on the test sample (12), whereby microwave radiation which strikes the test sample (12) at the intended point during the calibration test is detected according to amplitude and phase and is stored in a memory (28).

7. Method according to claim 1, characterized in that the distribution of dielectric constants ($\varepsilon(\underline{r})$) is calculated in three-dimensional form in the test sample (12) using the following equations:

$$V(\underline{r}) = \frac{\omega}{c} \left( \sqrt{\varepsilon \mu}' - \sqrt{\varepsilon(\underline{r}) \cdot \mu(\underline{r})}' \right) \quad \text{and}$$

$$V = G_S^{-1} \psi_S (\mathbb{1} \psi_0 + G_T G_S^{-1} \psi_S)^{-1},$$

$V(\underline{r})$ being the diffusion potential, $\omega = 2\pi f$ being the angular frequency of the microwave radiation used, c being the velocity of light, $\varepsilon$ being the dielectric constant of the coupling medium, $\mu$ and $\mu(\underline{r})$ being the permeability of the coupling medium or of the test sample, $G_S$ and $G_T$ being the Greens function – preferably in matrix display – for the spread of the microwave radiation from the test sample to a measuring point in the specified volume or between two points in the test sample, $G_S^{-1}$ being the inverted Greens function $G_S$, $\psi_0$ being the incoming radiation field at the point of the test sample, and $\psi_S$ being the diffusion field at the measuring point and

$$\mathbb{1}$$

the unit operator (preferably the unit matrix).

8. Measuring apparatus for determining the distribution of dielectric constants in a test sample, in which the test sample (12) is irradiated with radiation (10) emitted by a microwave transmitter (8), in which the radiation transmitted and diffused by the test sample (12) is detected by a microwave detector (14) according to amplitude and phase, and in which the distribution of the dielectric constants is calculated from the output signal (A) of the microwave detector (14) and presented in pictorial display, characterized in that the microwave detector (14) is designed, and can be adjusted, so that it detects the transmitted and diffused radiation in the specified volume ($\Delta V$) according to amplitude and phase, and in that the output signal (A) of the detector (14) is fed to a computer (32) which calculates the three-dimensional distribution ($\varepsilon(\underline{r})$) from it.

9. Measuring apparatus according to claim 8, characterized in that the microwave detector (14) is constructed areally as an array, and in that a device (16) is provided for the linear displacement of the microwave detector (14).

10. Measuring apparatus according to claim 9, characterized in that the single detectors (14a) of the microwave detector array (14) are arranged on a plane surface.

11. Measuring apparatus according to one of claims 8 to 10, characterized in that dipole aerials are provided as the single detectors (14a) of the microwave detector (14) which is constructed as an array.

12. Measuring apparatus according to one of claims 8 to 11, characterized in that the microwave transmitter (8), the test sample (12) and the microwave detector (14) are accommodated together in a coupling medium (46) of high dielectric constants.

13. Measuring apparatus according to one of claims 8 to 12, characterized in that a high-frequency oscillator (4) is provided for operation of the microwave transmitter (8), the output signal of which oscillator is fed as reference signal (RS) to a phasesensitive detector (22), the input of which detector is acted upon by the output signal (A) of the microwave detector (14).

14. Measuring apparatus according to claim 13, characterized in that the output signal (P, H) of the phase-sensitive detector (22) is fed by way of an analog-to-digital converter (24) to a memory (28, 30).

15. Measuring apparatus according to claim 14, characterized in that the output signal of the analog-to-digital converter (24) is fed selectably to a memory (28) for calibration measurement data, or to a memory (30) for measurement data from the test sample (12).

16. Measuring apparatus according to claim 14 or 15, characterized in that the output of the memory (28, 30) is connected to the computer (32), which is connected to a monitor (34).

17. Measuring apparatus according to claim 16, characterized in that the computer (32) is set up to form a control signal (C) which acts upon the highfrequency oscillator (4).

EP 0 217 111 B1